(19) Europäisches Patentamt / European Patent Office / Office européen des brevets

(11) **EP 2 405 291 A2**

(12) **EUROPEAN PATENT APPLICATION**

(43) Date of publication:
**11.01.2012 Bulletin 2012/02**

(51) Int Cl.:
***G02B 6/36*** *(2006.01)*

(21) Application number: **10170261.1**

(22) Date of filing: **21.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **08.07.2010 US 832565**

(71) Applicant: **Tyco Electronics Nederland B.V.
5222 AR's-Hertogenbosch (NL)**

(72) Inventor: **Schneider, Paul
5291AH, Gemonde (NL)**

(74) Representative: **Johnstone, Douglas Ian
Baron Warren Redfern
Cambridge House
100 Cambridge Grove
Hammersmith
London
W6 0LE (GB)**

(54) **Method and apparatus for routing optical fibers in flexible circuits**

(57)    A device including first and second components respectively including first and second circuits interconnected by a flexible panel including an optical fiber (20) wherein the optical fiber (20) has a longitudinal segment which traverses a curved path including a radial component about an axis (21) and crosses a mechanical coupling between the components, wherein the longitudinal segment has a component in a direction parallel to the axis (21). The longitudinal segment remains within a radius (r) of the axis (21) which may be less than the minimum bend radius of the optical fiber (20).

FIG. 2B

EP 2 405 291 A2

**Description**

## FIELD OF THE INVENTION

The invention pertains to optical fibers. More specifically, the invention pertains to the routing of optical fibers over curved paths.

## BACKGROUND OF THE INVENTION

The use of optical fibers to transmit data over long distances is well known. However, optical fibers are now also being increasingly used to carry signals over very short distances within individual electronic devices due to their extremely large bandwidth and ability to carry large amounts of data over a single fiber in both directions simultaneously. Accordingly, the use of optical fibers for carrying signals in portable devices, such as laptop computers, mobile phones, video cameras, still cameras, personal digital assistants, and portable digital music players, is increasing.

Many electronic devices, particularly portable ones, for which minimizing their size is a significant design goal, employ mechanisms for folding parts of the device upon each other or sliding parts of the device relative to each other to expand or contract the profile of the device as needed.

Examples of such devices abound, including flip phones, video cameras with fold out video screens, laptop computers with fold up monitors, and cell phones with slide-out keyboards or displays.

Generally, at least some circuits within a first part of the device that on one side of a hinged or sliding connection have to electronically communicate with circuits in another part of the device on the other side of the hinge or sliding mechanical connection.

Accordingly, signal lines must cross such moveable mechanical connection means, such as hinges and sliding connections. Such requirements present some design difficulties in terms of creating a flexible and/or moveable electrical signal path that can survive repeated bending, flexing, translation or other movement. When copper wires are used to transmit signals across such mechanical hinges or other moveable mechanisms, the radius of any bends in the wires typically is not a problem since a copper wire can be bent to virtually any radius without any significant impact on its signal transmission quality.

However, this is not true of optical fibers. Optical fibers can break if bent to a very small radius. Furthermore, with respect to most optical fibers, their ability to transmit light is substantially compromised long before they reach the physical breaking point radius. More specifically, if an optical fiber is bent too sharply, light traveling in the core of the fiber can actually escape through the cladding and be lost.

Most optical fibers in use today have a minimum bend radius of about 20 to 25 millimeters. Some optical fibers are now available with minimum bend radii as small as 15 millimeters and it is believed that optical fibers will soon be available with minimum bend radii as small as 10 millimeters. However, such minimum bend radii are still larger than desired for many applications.

## SUMMARY OF INVENTION

The invention concerns a technique for routing an optical fiber through a bend so that it can traverse a hinge or other mechanical connector having a bend radius smaller than the minimum bend radius of the fiber. Particularly, the radius of curvature of an optical fiber traversing a bend can be maximized by routing the fiber so as to have a route component parallel to the axis about which the fiber must bend. For instance, in a hinged connection in which the optical fiber must bend around the axis of the hinge, the optical fiber may be routed over the arc around the hinge with a route component parallel to the axis of the hinge.

## BRIEF DESCRIPTION OF THE DRAWINGS

Figure 1A is a perspective view illustrating an optical fiber of the prior art in a flat, unbent state.

Figure 1B is a perspective view of the optical fiber of the prior art of Figure 1A folded over on itself about a bend radius of r.

Figure 1C is a top plan view of the folded fiber of Figure 1B.

Figure 1D is a side plan view of the folded fiber of Figure 1B.

Figure 1E is a front plan view of the folded fiber of Figure 1B.

Figure 2A is a perspective view of a fiber in accordance with the principles of the invention in a flat, unbent state.

Figure 2B is a perspective view of the optical fiber of Figure 2A folded over on itself about a bend radius of r.

Figure 2C is a top plan view of the folded fiber of Figure 2B.

Figure 2D is a side plan view of the folded fiber of Figure 2B.

Figure 2E is a front plan view of the folded fiber of Figure 2B.

Figure 3 is a view of the optical fiber of Figures 2A-2E in a flat, unbent state illustrating the effective bend radius of the optical fiber.

Figure 4 is a perspective view of how the optical fiber of Figures 2A-2E might bend in association with a sliding mechanical connection.

Figure 5 is a perspective view of an alternative embodiment of an optical fiber in a flat, unbent state in accordance with the principles of the present invention.

Figure 6A is a perspective view of a fiber optic ribbon cable in accordance with the principles of the present invention.

Figure 6B is a perspective view of the fiber optic ribbon cable of Figure 6A folded over on itself to the bend radius is r.

Figure 6C is a top plan view of the fiber optic ribbon cable of Figure 6B.

Figure 6D is a side plan view of the fiber optic ribbon cable of Figure 6B.

Figure 6E is a front plan view of the fiber optic ribbon cable of Figure 6B.

Figure 7 is a diagram illustrating directional conventions used in the present description.

## Detailed Description

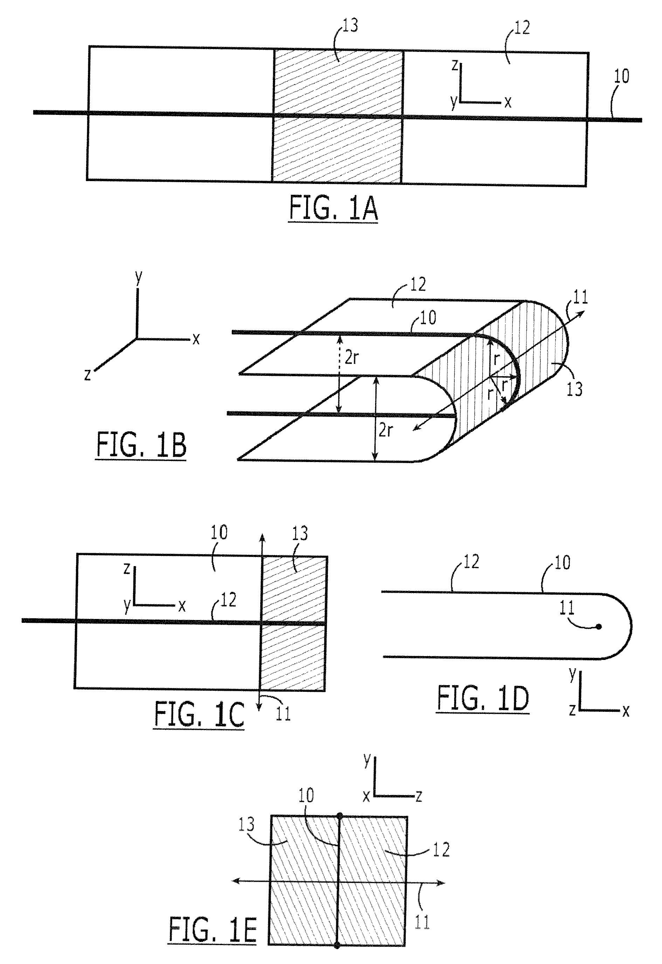

Figures 1A through 1E illustrate the routing of an optical fiber 10 about a curve in a conventional manner. Figure 1A is a perspective view of the optical fiber 10 in a flattened state (i.e. before it is routed through the curve). Figure 1B is a perspective view of the same fiber after it has been routed around an axis, a, within a radius r of axis a. Figures 1C, 1D and 1E are top, side, and front plan views of the fiber of Figure 1B from perspectives C-C, D-D, and E-E, respectively, in Figure 1B. In Figure 1A, an imaginary sheet 12 is shown defining a plane within which the optical fiber lies when unbent. Of course, in its flattened state, the optical fiber lies in an infmite number of potential planes and we have merely chosen one of them for illustrative purposes. This sheet 12 also is shown in the views of Figures 1B through 1E for visual reference purposes to help understand the drawings and the invention. Furthermore, a lengthwise segment 13 of the sheet 12 corresponding to the lengthwise segment of the fiber 10 that is bent is shown in cross hatching in all the drawings to further help with the understanding of the drawings and the invention.

As can be seen in Figures 1A-1E, if a conventional optical fiber 10 must be capable of bending about an axis a, such as a hinge mechanism of a flip phone, the radius r of the curvature of the optical fiber 10 around that axis 11 must be kept greater than the minimum bend radius of the fiber.

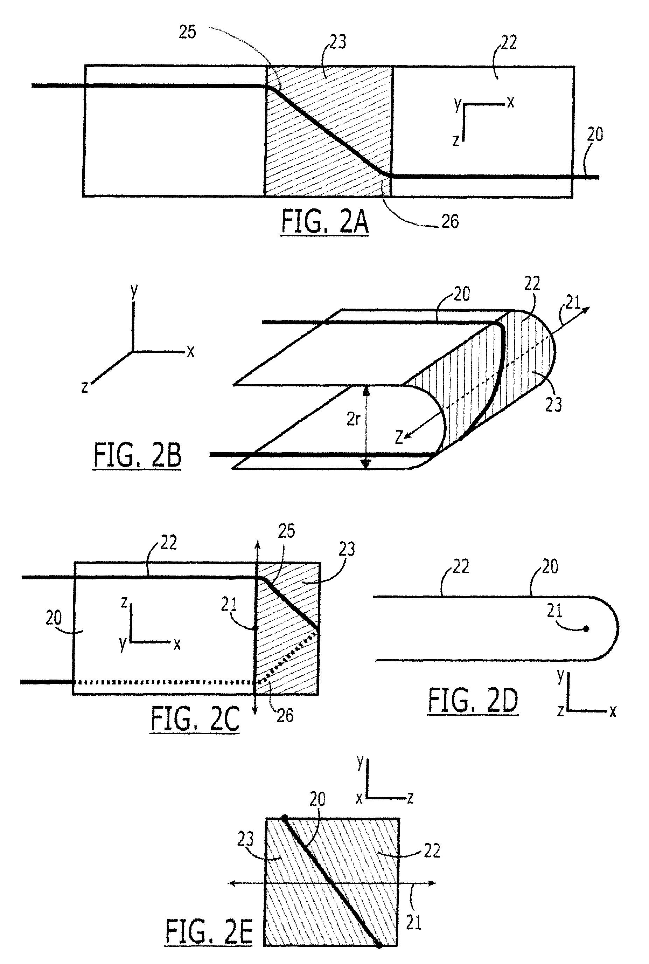

Figures 2A-2E illustrate an optical fiber routed in accordance with the principles of the present invention. The drawing Figures 2A through 2E correspond to the same views as Figures 1A through 1E, respectively. That is, Figure 1A is a perspective view illustrating the optical fiber in an unbent state; Figure 2B is a perspective view of the optical fiber bent around axis 21 with the fiber remaining within a radius r of axis 21. Figures 2C, 2D, and 2E are top, side, and front plan views, respectively of the folded fiber of Figure 2B. Finally, sheet 22 corresponds to sheet 12 in Figures 1A-1E.

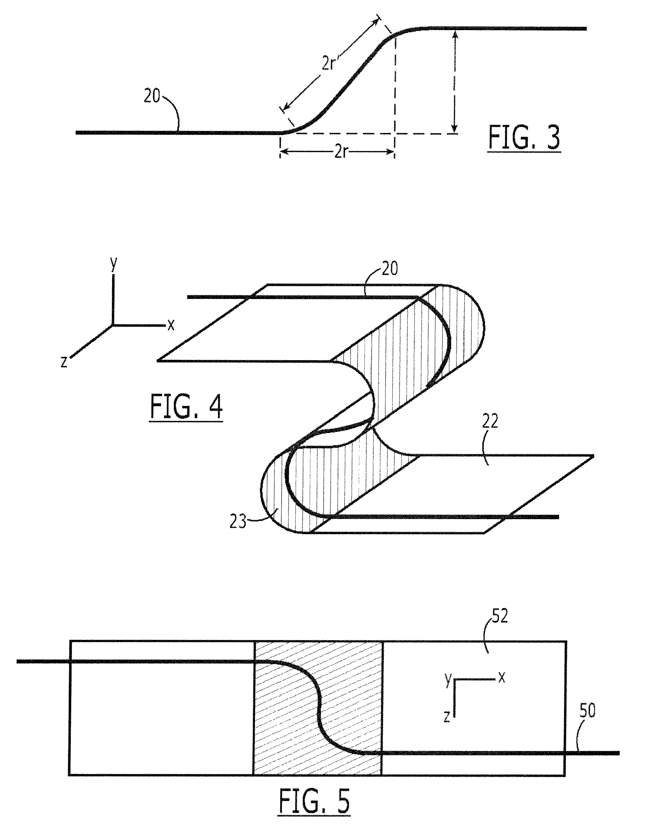

As can be seen in the Figures, the longitudinal portion of the inventive fiber 20 that bends around the axis 21 has been given a lateral component in addition to its radial component around the axis 21. Referring to the coordinate system shown in Figures 2A-2E, the radial component is the component of curvature in the xy plane, which is a curve of radius r about the axis a. The lateral component is the fiber route component in the z direction. It should be apparent from the Figures, and particularly Figure 2B, that the fiber 20 remains within a radius r of axis a (i.e., the radial component of curvature about the axis 21, i.e., perpendicular to the z axis, is r). However, the effective bend radius experienced by the fiber 20 is much greater than r. In the embodiment of Figures 2A through 2E, the path of the fiber 20 in the longitudinal segment in which it is curved around the axis a (i.e., the cross hatched area 23) comprises a substantially straight line (see Figure 2A), i.e., the lateral route component is substantially monotonic. This is merely exemplary, as the path need not necessarily be a straight line. However, if it is a straight line, then the effective bend radius of the fiber 20 over segment 23 is easily calculable via the Pythagorean theorem. Particularly, referring to Figure 3, which is similar to the flattened view of the fiber of Figure 2A, but with additional reference data, the bend radius around the axis 21 has previously been defined as r (i.e., the bent longitudinal segment of the fiber remains within r of the axis). That makes the diameter 2r. Let us call the length of the lateral component (in the z direction) of the fiber route 1. Thus, we know from the Pythagorean Theorem that the sum of the squares of the sides of a right triangle is equal to the square of the hypotenuse. Therefore:

$$(2r)^2 + l^2 = (2r')^2$$

where r' is the effective bend radius of the optical fiber. Stated another way:

$$r' = \frac{\sqrt{[(2r)^2 + l^2]}}{2}$$

Note that the curvature of the fiber at the transition areas 25 and 26 should be gradual so as not to exceed the minimum bend radius of the fiber in these areas. Also, note that the equations above are approximations since they do not factor in the fact that the fiber route in area 23 is not actually perfectly straight, but includes some curvature in areas 25 and 26.

Figure 4 illustrates the same optical fiber 20 as in Figures 2A-2E, but showing how it might bend in association with a sliding mechanical connection, in which the imaginary sheet 22 would bend into an S-shaped curve (rather than the U-shaped curve of Figures 2B-2E).

As just noted, the monotonic lateral component illustrated in the embodiment of Figures 2A-2E is merely exemplary. Other shapes are possible also. For instance, Figure 5 is a view of an alternate optical fiber in its flat state illustrating another possible route.

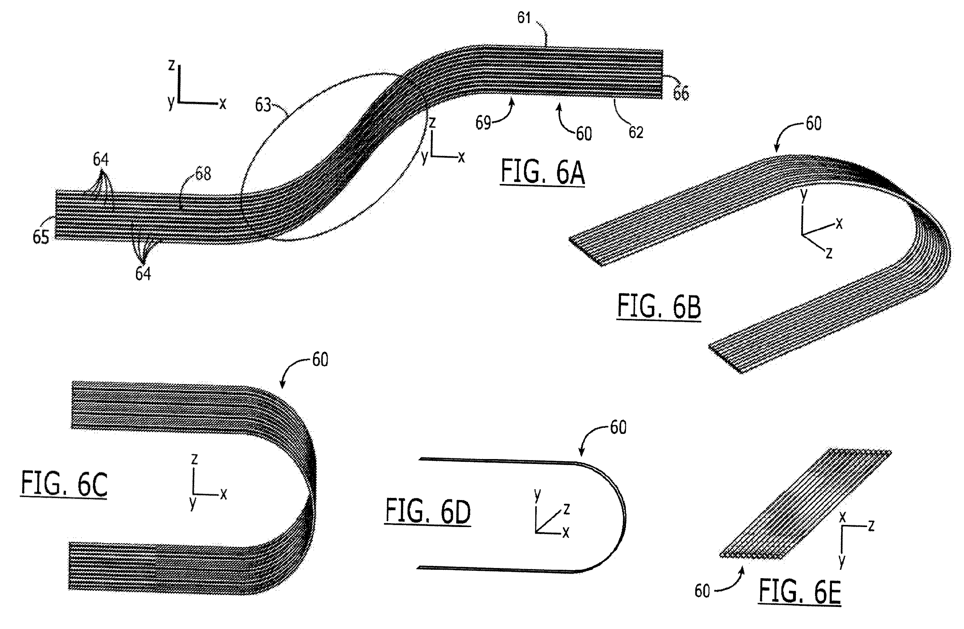

Figures 6A-6E are a series of views similar to the view of Figures 1A-1E, respectively, or 2A-2E, respectively, of a ribbon cable 60 constructed in accordance with the principles of the present invention. It is possible to fabricate ribbon cables, foils, flexible printed circuit boards, etc. employing the principles of the present invention in which other, non-optical signal conductors, such as copper wires and copper coaxial conductors also are embedded. Thus, for instance, in the ribbon cable of Figures 6A-6E, some of the signal conductors 64 may be optical fibers, but others may be copper or other electrically conductive conductors.

In the flat state shown in the view of Figure 6A, the ribbon cable 60 comprises a plurality of signal conductors 64 laid out side by side so as to form the ribbon 60 having first and second longitudinal ends 65, 66 and first and second parallel opposing major surfaces 68, 69 with the signal conductors running the longitudinal extent of the ribbon between the first and second ends 65, 66.

The ribbon 60 runs substantially in a longitudinal direction, x. However, longitudinal segment 63 of the ribbon 60 includes a path component in direction z; parallel to the first and second opposing major surfaces and transverse to the primary longitudinal direction x of the ribbon.

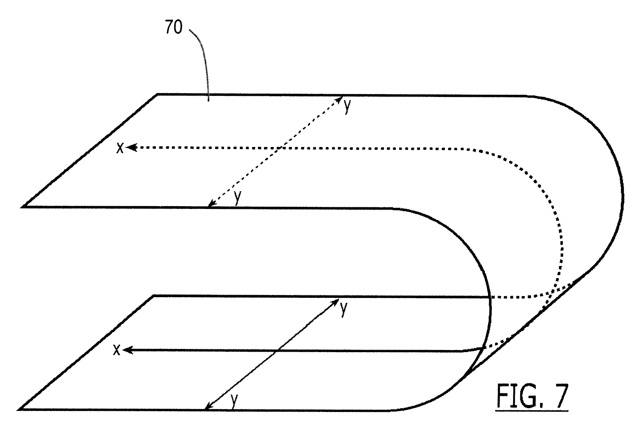

Thus, with reference to Figure 7, describing the fiber paths in more geometric terms, we can consider a ribbon cable to define an imaginary surface 70, namely, the surface that contains the centers of all of the fibers in the cable. The aforementioned two parallel opposing major surfaces 68, 69 of the ribbon 60 are parallel to this surface 70. When the ribbon cable is laid flat, surface 70 is substantially planar. However, when the cable is curved, the surface 70 is commensurately curved. We can consider that, within this surface 70, there are two dimensions. Let us define the direction corresponding to the direction between the longitudinal ends of the ribbon cable as the x direction and the direction corresponding to the direction between the two parallel edges 61, 62 of the ribbon cable as the y direction. In a conventional ribbon cable, the fiber paths have a directional component only in one direction, the x direction. However, in a ribbon cable incorporating the present invention, at least a portion of the fiber paths have a component in the y direction also.

While Figures 6A-6E illustrate an embodiment of a ribbon cable in which the entire cable 60 has a transverse path component, this is merely exemplary. In yet other embodiments, the ribbon cable itself could remain entirely straight, while a longitudinal segment of the optical fibers within the ribbon cable include a path component transverse the longitudinal axis of the ribbon.

The principles of the invention also can be employed in connection with optical fibers embedded in flexible printed circuit boards (which may include both copper and optical fiber conductors).

Similarly, the principles of the invention may be employed in connection with interconnections between different layers of a multi layer printed circuit board or between two parallel-mounted printed circuit boards.

Having thus described a few particular embodiments of the invention, various alterations, modifications, and improvements will readily occur to those skilled in the art. Such alterations, modifications and improvements as are made obvious by this disclosure are intended to be part of this description though not expressly stated herein, and are intended to be within the scope of the invention. Accordingly, the foregoing description is by way of example only, and not limiting. The invention is limited only as defined in the following claims.

**Claims**

1. An electronic device comprising:

   a first component containing a first circuit;
   a second component containing a second circuit;
   a mechanical coupling between the first component and the second component wherein the first component is movable relative to the second component between at least a first position and a second position ;
   at least one optical fiber coupled between the first circuit and the second circuit across the mechanical coupling for transporting signals between the first circuit and the second circuit;
   wherein the optical fiber traverses a curved path across the mechanical coupling when the mechanical coupling is in at least the first position, the curved path including a radial component about an axis wherein the optical fiber is bent around the axis such that a longitudinal segment of the optical fiber remains within a radius r of the axis;
   wherein the path of the longitudinal segment of the optical fiber has a component in a direction parallel to the axis.

2. The electronic device of claim 1 wherein the optical fiber is embedded in a ribbon cable having first and second parallel opposing major surfaces, and wherein the longitudinal segment of the optical fiber traverses a path on the ribbon having directional components in two dimensions parallel the first and second opposing major surfaces.

3. The electronic device of claim 1 or 2 wherein the radius r is less than a minimum bend radius of the optical fibers.

4. The electronic apparatus of claim 1, 2 or 3 wherein the mechanical coupling comprises a hinge.

5. The electronic apparatus of claim 1, 2 or 3 wherein the mechanical coupling comprises a sliding coupling.

6. The electronic apparatus of any preceding claim wherein the electronic apparatus is a telephone.

7. A method of routing an optical fiber radially around an axis such that the optical fiber remains within a distance, r, of the axis, comprising:

    imparting a bend component to a path of a longitudinal segment of the optical fiber in a plane perpendicular to the axis so that the longitudinal segment of the optical fiber remains within the distance r of the axis ; and
    imparting a lateral component parallel to the axis to the path of the longitudinal segment of the optical fiber.

8. The method of claim 7 wherein r is less than a minimum bend radius of the optical fiber.

9. The method of claim 7 or 8 wherein the bend component and the lateral component are coextensive in the optical fiber.

10. The method of claim 7, 8 or 9 wherein the lateral component is substantially monotonic.

11. A flexible panel comprising a plurality of substantially coplanar, substantially parallel optical fibers, the panel having a primary longitudinal dimension in which light travels between first ends and second ends of the plurality of optical fibers, wherein paths of the plurality of optical fibers in the panel include a component between the first end and the second end of the optical fibers in the plane of the panel perpendicular to the primary longitudinal dimension of the optical fibers.

12. The flexible panel of claim 11 wherein the panel further includes electrical conductors.

13. The flexible panel of claim 11 or 12 wherein the panel includes a bend around an axis oriented substantially perpendicular to the primary longitudinal dimension of the panel as well as a lateral displacement in a direction parallel to the axis.

14. The flexible panel of claim 13 wherein the bend component and the lateral component are coextensive.

15. The flexible panel of any of claims 11 to 14 wherein the panel is a ribbon cable.

16. The flexible panel of claim 11 wherein the bend around the axis measured in a plane perpendicular to the axis has a radius of r, where r is less than a minimum bend radius of the optical fibers.

FIG. 1A

FIG. 1B

FIG. 1C

FIG. 1D

FIG. 1E

FIG. 2A

FIG. 2B

FIG. 2C

FIG. 2D

FIG. 2E

FIG. 3

FIG. 4

FIG. 5

FIG. 6A

FIG. 6B

FIG. 6C

FIG. 6D

FIG. 6E

FIG. 7